# EUROPEAN PATENT APPLICATION

(11) **EP 1 998 500 A1**
(43) Date of publication of application: **03.12.2008**
(21) Application number: 07252211.3
(22) Date of filing: 30.05.2007
(51) Int. Cl.: H04L 12/28, H04L 12/58

(54) **Channel selection in a wireless network**

(71) Applicant: BRITISH TELECOMMUNICATIONS public limited company, London EC1A 7AJ (GB)
(72) Inventor: The designation of the inventor has not yet been filed
(74) Representative: Sayer, Robert David

(57) **Abstract**

The present invention provides a method for selecting a channel in a wireless network. A wireless terminal counts a number of transmitted frames; performs a first weighting of the frames received on each channel; performs a second weighting of the frames received from each access point and then selects the access point having the highest total weighting and with a signal to noise ratio that exceeds a predetermined threshold.

## Description

The present invention relates to the selection of a channel in a wireless network, and in particular to the selection of a channel providing good performance in a wireless local area network.

Wireless local area networks (WLANs) are increasingly being used, for example to allow one or more personal computers to access the internet via a broadband connection or to form (or to extend) a LAN without requiring the cost and inconvenience required to install the required cabling and infrastructure. Conventionally, WLANs use one of the IEEE 802.11x standards, referred to as WiFi which operate within a defined frequency range. For example 802.11a operates at 5Ghz and the other 802.11 WLAN protocols operate frequencies around 2.4GHz. For 802.11b, 14 different channels are defined, with frequencies ranging from 2.412GHz to 2.484GHz. Regulatory constraints mean that the channels that are available for use will vary from country to country: in Japan all 14 channels may be used whereas in the USA only channels 1-11 can be used and in Europe (in general) channels 1-13 may be used.

One of the disadvantages of wireless communication systems is that each channel has a limited bandwidth available to users and if a channel has a number of users then they will be competing to use the available bandwidth. With WiFi products it is possible to select a different channel if there is interference or congestion on a channel being used, but it is not always clear which channel a user should select. Furthermore, WiFi products may face competition from other wireless communications (for example amateur radio, Bluetooth, some cordless telephones, etc.) or other forms of interference (for example from microwave interference).

US 2004/0102192 A1 describes a technique in which all possible wireless channels are scanned and then the activity level of each channel is displayed to the user so that the user can select one of the channels. The selection criteria that are used when identifying the activity level of a channel are chosen from: a particular network that is desired by a user, the highest SNR (signal to noise ratio), the signal quality and the channel utilisation. Other approaches to the problem of selecting a channel in a wireless network are disclosed in EP-A-1 603 275, US 2004/0039817, US 2003/0181211 & US 2005/0119006.

According to a first aspect of the present invention there is provided a method of selecting a channel from a plurality of channels in a wireless communication network, the method comprising the steps of: a) receiving a plurality of frames at a terminal, the frames being transmitted by a plurality of access points; b) counting the number of frames received on each channel of the plurality of channels; c) counting the number of frames received from each of the plurality of access points; d) assigning a weight to each of the channels based on the results of step b); e) assigning a weight to each of the access points based on the results of step c); f) combining the weights assigned in step d) with the weights assigned in step e); and g) selecting the access point that has the greatest combined weight and a signal-to-noise ratio that exceeds a predetermined threshold. The invention may comprise the further step of h) making a connection to the access point selected in step g).

The method of the present invention provides a number of advantages over the known approaches referred to above. Firstly, the method is automatic and does not require any input from a user to select a channel. The method will not cause any additional interference to busy or heavily-loaded networks as it merely counts and analyses frames that are being transmitted over one or more WLANs. The use of the weighting mechanisms, and their combination together, means that a terminal is unlikely to select a WLAN that either has a high SNR but is congested due to a large number of uses or is lightly loaded but has a low SNR. The weighting mechanisms are easy to implement and will not require significant processing power from the terminal, making the channel selection a relatively quick process to perform.

The weighting assigned to each channel in step d) may be increased for those channels which are least likely to receive interference from one or more other channels. The terminal may receive packets for a predetermined period of time. If the signal-to-noise ratio of the access point falls below the predetermined threshold then the terminal may end any connection with the access point and return to step a) to select a further access point. In particular, the terminal may end a connection with the access point and return to step a) to select a further access point if the access point signal-to-noise ratio remains below the below the predetermined signal-to-noise ratio threshold for a predetermined period of time.

According to a second aspect of the present invention there is provided a computer program product, comprising computer executable code for performing a method as described above.

According to a third aspect of the present invention there is provided a terminal comprising a wireless communication interface, processing means, memory means and storage means, the terminal being configured, in use, to: i) receive a plurality of frames at a terminal, the frames being transmitted by a plurality of access points; ii) count the number of frames received on each channel of the plurality of channels; iii) count the number of frames received from each of the plurality of access points; iv) assign a weight to each of the channels based on the results of step ii); v) assign a weight to each of the access points based on the results of step c); vi) combine the weights assigned in step iv) with the weights assigned in step e); and vii) select the access point that has the greatest combined weight and a signal-to-noise ratio that exceeds a predetermined threshold.

The present invention will now be described with respect to the following Figures, which are provided by way of example only, in which:
Figure 1 shows a schematic depiction of a wireless local area network; and
Figure 2 shows a schematic depiction of a flowchart describing a method according to an embodiment of the present invention.

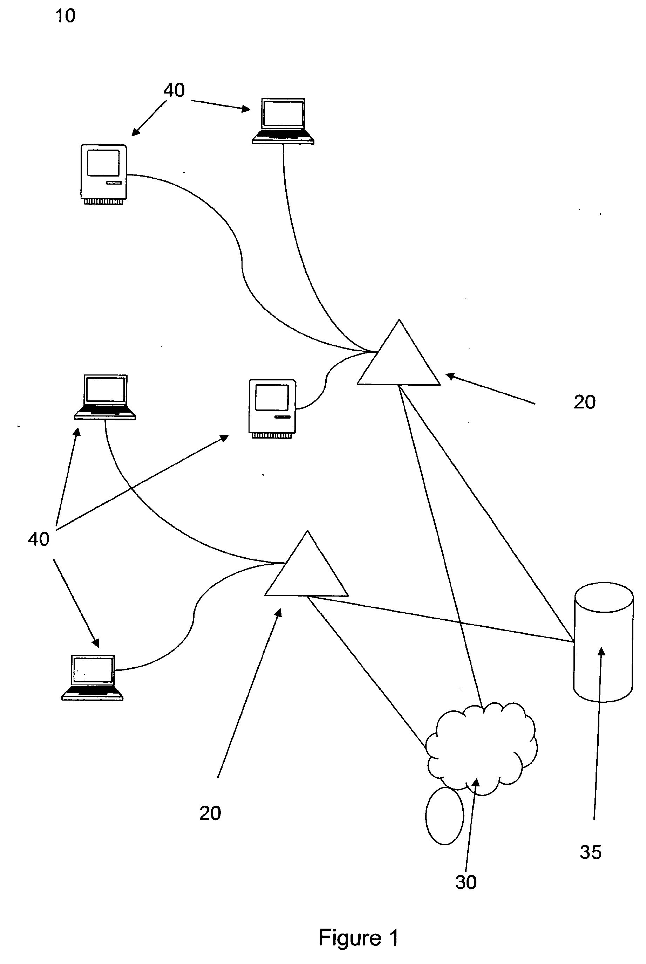

Figure 1 shows a schematic depiction of a wireless local area network 10 which comprises a plurality of terminals 40 connected to wireless access points (WAPs) 20, which are in turn connected to further networks 30 or databases 35. In general, the WAPs are connected to the further networks 30 or databases 35 via a wired link but this is not important to the working of the present invention. The terminals 40 are connected to the WAPs via a wireless communication protocol, for example one of the 802.11x wireless protocols (commonly referred to as WiFi). Conventionally, a WAP is provided with a preselected WiFi channel, although it is possible for a user to select a different channel. If a number of terminals are in a geographically proximate location then it is possible that there may be interference between the different channels that are being used. This problem may be ameliorated by the users selecting different channels but this will require co-ordination and co-operation between the users, who may not possess the technical knowledge necessary to identify the combination of channels that will lead to decreased interference.

When operating in a 802.11 WLAN, terminals will scan the radio interface to obtain information regarding available WAPs. The information that is obtained will vary for the different manufacturers and types of WAP. However, the information that is most commonly supplied is the channel number, Service Set Identifier (SSID, which identifies the WAP) and the signal to noise ratio (SNR). A terminal may scan in one of two methods, using either active or passive scanning. If the active scanning method is used then a terminal will send a probe request on all channels to gain information such as SSID, etc. Further information such as channel frequency and the SNR can be determined by scanning the response to the probe requests. Using the passive method, the terminals listen to all channels for similar information to be broadcast or otherwise transmitted by the WAPs.

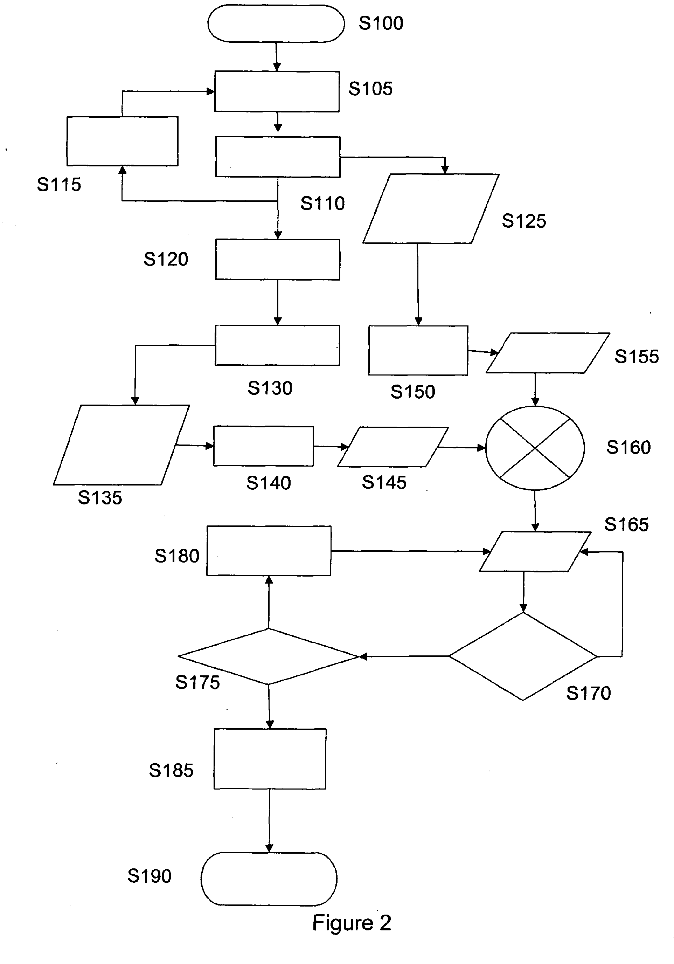

Figure 2 shows a schematic depiction of a flowchart describing a method according to an embodiment of the present invention when used with a WLAN that is operating in accordance with the 802.11 b standard.. At step S100 the process is started and at step S105 the terminal scans the radio interface to detect a channel being transmitted. At step S110 the terminal counts the frames received on a particular channel and then stores them for subsequent processing. The process then changes the channel at step S115 and returns to step S105 to scan for a further channel. At step S125 the number of frames per channel are collected and at step S150 a channel weighting is derived from the frame count. This data is used to form Table 1 at step S155. An example of Table 1 is given below, where the channel number is tabulated along with the number of frames received on that channel.

**Table 1: Channel Weighting**

| **Channel** | **No. of Frames** | **Weight** |
|---|---|---|
| 1 | 100 | 4+1 |
| 2 | 130 | 3 |
| 6 | 200 | 2 |
| 4 | 400 | 1+1 |
| 11 | 60 | 5+1 |

The weighting scheme gives priority to the least crowded channels, that is those channels on which have been transmitted the fewest number of frames. In the example given above, there are five channels in use and thus the busiest channel (i.e. the channel with highest frame count) will be assigned the lowest weighting (in this case channel 6) and the least busy channel (i.e. the channel with lowest frame count) will be assigned the highest weighting (in this case channel 11). The weighting of the other channels are applied appropriately, with the weighting decreasing with increasing channel use.

The 8021.11 b specification defines the centre frequency of each of the channels and each channel is separated from the previous and subsequent channels by a 5 MHz spacing. In practice a 802.11b signal occupies a 30MHz and thus channels 1, 6 & 11 are referred to as being non-overlapping as they are least prone to interference. Because of this, according to one embodiment of the present invention, the weighting of the non-overlapping channels (that is channels 1, 6 & 11) is increased by 1.

It will be understood that for different 802.11 WLAN standards, different channels will be non-overlapping (or least prone to interference). Those channels that are least likely to experience interference from other channels may have their weighting increased to account for this difference.

Furthermore, at step S130 the frames are decapsulated and the frames associated with each SSID (that is, each WAP in the network) are counted. The frame count and the SNR associated with each SSID are stored at step S135 and at step S140 a WAP weighing is performed to form Table 2 (step S140). An example of Table 2 is given below. As discussed above, with reference to Table 1, the highest weighting value is the number of WAPs detected by the terminal. The least busy WAP is assigned the greatest weighting, with the weighting being decreased by 1 for the next busiest WAP and so on, until the busiest WAP is assigned a weighting of 1.

**Table 2: WAP weighting**

| **SSID** | **No. of Frames** | **Weight** | **SNR (bars)** |
|---|---|---|---|
| A | 20 | 4 | 4 |
| B | 31 | 3 | 3 |
| C | 12 | 5 | 5 |
| D | 34 | 2 | 5 |
| E | 55 | 1 | 4 |

After the construction of Tables 1 & 2, they are merged at step S160 to give Table 3. This table can be used to determine the WAP and the channel that will be most suitable for a connection. Based on Tables 1 and 2 above, below is the Table 3 that would result from their combination.

It will be noted that the total number of frames in Table 1 is different from the total number of frames in Table 2. This is because Table 1 shows the results for frames that were received from a number of WAPs which do not have an entry in Table 2. For example, the node received 20 frames from the WAP with SSID A, which was using Channel 1. It will be seen from Table 1 that a total of 100 frames were received on Channel 1 and thus it will be apparent that 80 of those frames were transmitted by other WAPs that do not have an entry in Table 2.

**Table 3: Merged WAP and channel weighting**

| **SSID** | **Channel** | **No. of Frames** | **WAP Weight** | **Channel weight** | **Total weight** | **SNR (bars)** |
|---|---|---|---|---|---|---|
| A | 1 | 20 | 4 | 5 | 9 | 4 |
| B | 2 | 31 | 3 | 3 | 6 | 3 |
| C | 4 | 12 | 5 | 2 | 7 | 5 |
| D | 6 | 34 | 2 | 2 | 4 | 5 |
| E | 11 | 55 | 1 | 6 | 7 | 4 |

Referring to Figure 2, at step S170 a WAP is selected and if it has the highest total weighting then the process continues to Step S175, where the SNR associated with the selected WAP is compared against a predefined SNR threshold. If the selected WAP does not have the highest total weighting value in Table 3 then the another WAP is selected from Table 3 until the appropriate WAP is selected.

If the selected WAP having the highest weighting value has a SNR value that is equal to or greater than the predefined SNR threshold then the terminal will proceed to initiate a connection at step S185 and the selection process ends at step S190. If the selected WAP having the highest weighting value has a SNR value that is below the predefined SNR threshold then the WAP is removed from Table 3 at step S180 and the WAP having the next highest weighting is selected from the updated Table 3. The predefined SNR threshold will be determined by the terminal in accordance with the power management policy of the WAP itself; the value of the threshold may be varied in accordance with a users preference or the requirements of the communications protocols that are being used over the WLAN. For example, a video conferencing session may have different requirements when compared with web browsing or accessing emails.

Referring to Table 3, if the power management scheme for the terminal will not connect to any WAP which has a SNR of lower than 4 then no connection will be made to WAP B regardless of the weighting associated with that WAP. Therefore, any particular WAP will not be chosen solely based on its weighting, which reflects channel and WAP activity alone. By excluding those WAPs having a poor signal quality the terminal will not waste power or introduce further interruptions to a poor link. If the terminal does have a SNR threshold of 4 then a connection will be made to WAP A, as it has the greatest weighting value and a SNR that equals the threshold value.

In the event that two (or more) WAPs have the same highest weighting then the terminal will select one of the WAPs at random. In the event that the SNR threshold were to be 5 then a terminal carrying out the method of the present invention would firstly exclude WAP A as the SNR value is too low. It would.then randomly select either WAPs C or D as they both have a weighting of 7. If C were to be selected then the SNR value meets the threshold value and thus the terminal would connect to WAP C. If D were selected then the SNR value does not meet the threshold value and thus D would be removed from Table 3. The terminal would then connect to WAP C, as it is the only remaining WAP having a weighting of 7 and the SNR value meets the threshold.

The initial stage of collecting and counting frames will be continued until a sufficient number of frames have been collected in order to carry out the process described above. The time required to do so will be dependent upon the rate at which frames are transported by the WAPs that a terminal can receive frames from. It should be understood that a faster network connection is required, then frames should be collected for a shorter period of time. A disadvantage of this is that the terminal may not collect a sufficient number of frames to from an accurate or representative sample of frames. Therefore it may be possible to make a trade-off between the time taken to make a connection and the accuracy of the sampling. It may be possible for a user to be able to select or control this parameter.

Once a WAP has been selected using a method according to the present invention and a connection has been made, then the SNR may be monitored and if the SNR falls below the SNT threshold then the selection process may be repeated. Alternatively, if the SNR falls below the SNR threshold for a prolonged period then the selection process may be repeated.

The present invention has been explained above in the context of the 802.11 b specification. It will be understood that the method of the present invention is equally applicable to other 802.11 WLAN specifications (for example 802.11 a, 802.11 g, 802.11 n, etc.) and also to other wireless technologies and protocols that use select one or more channels from multiple channels.

The terminal may be a portable or desktop computer that comprises an appropriate wireless network interface or a similar device (which may be integrated into the terminal or be a removable network interface), such as a games console, set-top box, interface appliance, etc. Alternatively, the terminal may be a cellular telephone, or other communication device, having an appropriate wireless network communication interface. In general, the terminal will have a display that indicates to the user that a connection to a selected WAP has been made, a central processing unit for executing the operating system, and any further APIs or applications required to access a WLAN, volatile memory for storing active data and applications and non-volatile storage, such as flash memory or hard drive.

It will be understood that the present invention will be implemented as a program or software, component that is executed by the terminal. Software implementing a method according to the present invention may be supplied on physical media (such as a USB drive, CD-ROM, DVD, etc) or supplied or made available for transfer or download via a communications network.

The weighting arrangements described above may be varied, for example to provide a non-linear weighting that provides a greater weighting to the least busy WAPs, or to provide a weighting that reflects more proportionally the distribution of frames amongst channels (or nodes) i.e. a first channel having half the number of frames than a second channel will have a weighting that is approximately twice that of the second channel.

## Claims

1. A method of selecting a channel from a plurality of channels in a wireless communication network, the method comprising the steps of:
a) receiving a plurality of frames at a terminal, the frames being transmitted by a plurality of access points;
b) counting the number of frames received on each channel of the plurality of channels;
c) counting the number of frames received from each of the plurality of access points;
d) assigning a weight to each of the channels based on the results of step b);
e) assigning a weight to each of the access points based on the results of step c);
f) combining the weights assigned in step d) with the weights assigned in step e); and
g) selecting the access point that has the greatest combined weight and a signal-to-noise ratio that exceeds a predetermined threshold.

2. A method according to Claim 1, comprising the further step of
h) making a connection to the access point selected in step g).

3. A method according to Claim 1 or Claim 2, wherein the weighting assigned to each channel in step d) is increased for those channels which are least likely to receive interference from one or more other channels.

4. A method according to any preceding claim, wherein in step a) the terminal receives packets for a predetermined period of time.

5. A method according to any preceding claim, wherein if the signal-to-noise ratio of the access point falls below the predetermined threshold then the terminal ends any connection with the access point and returns to step a) to select a further access point.

6. A method according to Claim 6, wherein the terminal ends a connection with the access point and returns to step a) to select a further access point if the access point signal-to-noise ratio remains below the below the predetermined signal-to-noise ratio threshold for a predetermined period of time.

7. A computer program product, comprising computer executable code for performing a method according to any of Claims 1 to 6.

8. A terminal comprising a wireless communication interface, processing means, memory means and storage means, the terminal being configured, in use, to:
i) receive a plurality of frames at a terminal, the frames being transmitted by a plurality of access points;
ii) count the number of frames received on each channel of the plurality of channels;
iii) count the number of frames received from each of the plurality of access points;
iv) assign a weight to each of the channels based on the results of step ii);
v) assign a weight to each of the access points based on the results of step c);
vi) combine the weights assigned in step iv) with the weights assigned in step e); and
vii) select the access point that has the greatest combined weight and a signal-to-noise ratio that exceeds a predetermined threshold.
